# DEMANDE DE BREVET EUROPEEN

(11) **EP 2 383 869 A2**
(43) Date de publication de la demande: **02.11.2011**
(21) Numéro de dépôt: 11003504.5
(22) Date de dépôt: 28.04.2011
(51) Int. Cl.: H02K 5/04

(54) **Groupe moto ventilateur**

(30) Priorité: 30.04.2010 FR 1078284
(71) Demandeur: Valeo Systemes De Controle Moteur, 95800 Cergy Saint-Christophe (FR)
(72) Inventeur: Cheri-Zecote, Eddy, 95650 Genicourt (FR); Morliere, Benjamin, 95520 Osny (FR); Marteau, Daniel, 95830 Fremecourt (FR)

(57) **Abrégé**

L'invention concerne un dispositif d'alimentation en courant électrique d'un groupe moto ventilateur de véhicule automobile, ledit dispositif comportant une plaque (5) porte-balais, pour l'alimentation en courant du moteur du groupe, un support (1) de circuit électronique (3) d'alimentation dudit moteur, ladite plaque (5) et ledit support (1) étant assujettis l'un à l'autre. Selon l'invention, ledit dispositif comporte en outre des moyens (13, 15, 17) d'assemblage du support (1) sur la plaque porte-balais (5), agencés pour assurer un pré-positionnement relatif de l'un par rapport à l'autre lors du montage.

## Description

L'invention concerne un dispositif d'alimentation en courant électrique d'un groupe moto ventilateur de véhicule automobile et un groupe moto ventilateur de véhicule automobile équipé d'un tel dispositif.

Actuellement, les groupes moto ventilateurs de véhicule automobile comportent une plaque porte-balais, pour l'alimentation en courant du moteur du groupe, et un support de circuit électronique d'alimentation dudit moteur, ladite plaque et ledit support étant assujettis l'un à l'autre.

Pour éviter d'avoir à manipuler deux pièces, plaque et support, il a déjà été proposé d'utiliser un circuit imprimé fixé à la culasse du moteur des groupes moto ventilateurs. Le circuit imprimé est une carte à circuit imprimé ou PCB (printed circuit board), généralement un SMI (substrat métallique isolé), et comprend des composants d'électronique de puissance et d'électronique de contrôle / commande, sur une première zone, et une plaque porte-balais (PPB), sur une seconde zone.

Cette solution présente l'inconvénient de devoir développer une nouvelle carte complète à chaque nouvelle application alors que certaines parties pourraient être standardisées. De plus, les SMI coûtent cher et sont situés dans une zone très chaude, ce qui créé un problème thermique.

L'objet de la présente invention est de pallier ces inconvénients.

A cet effet, l'invention concerne dispositif d'alimentation en courant électrique d'un groupe moto ventilateur de véhicule automobile, tel que décrit plus haut et comportant en outre des moyens d'assemblage du support sur la plaque porte-balais, agencés pour assurer un pré-positionnement relatif de l'un par rapport à l'autre lors du montage.

Ledit circuit électronique du support est, par exemple, un circuit de puissance et/ou de contrôle/commande d'alimentation du moteur du groupe moto ventilateur.

Le support comprend, par exemple, une plaque en aluminium issue de fonderie et ladite plaque en aluminium est reliée électriquement à la plaque porte-balais, notamment par des cosses participant à la fixation mécanique de la plaque et du support.

Ladite plaque porte-balais est destinée, par exemple, à être assujettie à la culasse du moteur du groupe moto ventilateur.

De préférence, les moyens d'assemblage comportent des moyens de saisie et de maintien et des moyens de positionnement.

Avantageusement, les moyens d'assemblage comportent un doigt de saisie et de maintien et des surfaces de référence pour le positionnement de la plaque porte-balais.

Avantageusement encore, la plaque porte-balais et les moyens d'assemblage sont agencés pour fixer ladite plaque audit support par la combinaison d'une translation de direction déterminée et d'une rotation autour d'un axe parallèle à ladite direction.

L'invention sera mieux comprise à la lumière de la description de l'invention et des dessins en annexe parmi lesquels :
- la figure 1 représente en perspective un exemple de réalisation d'un dispositif d'alimentation conforme à l'invention ;
- la figure 2 représente une partie des moyens d'assemblage de l'invention ;
- la figure 3a représente la plaque porte-balais assemblée à son support par les moyens d'assemblage de l'invention vue de dessus et
- la figure 3b représente la plaque de la figure 3a vue de dessous.

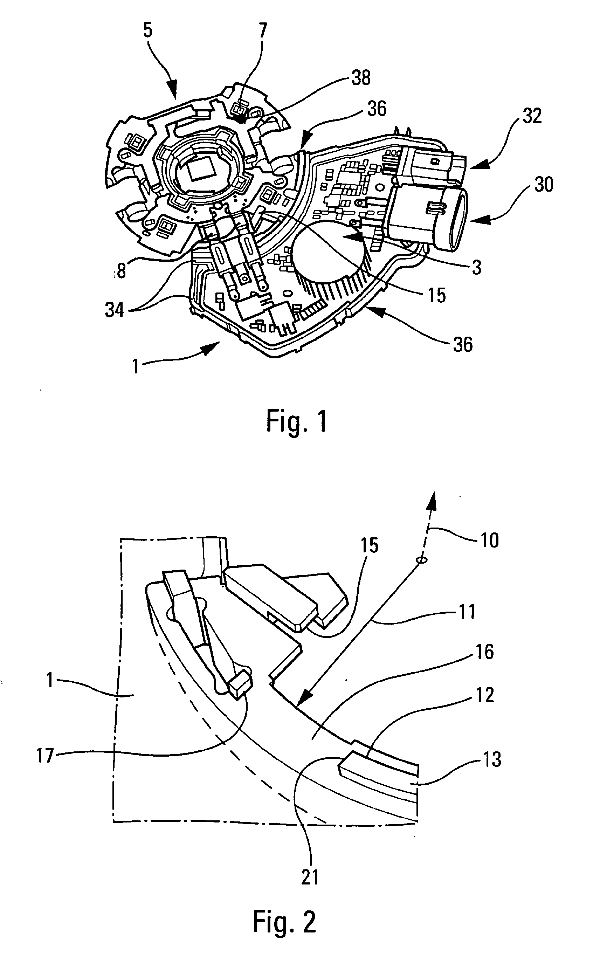

Comme illustré à la figure 1, l'invention concerne un dispositif d'alimentation en courant électrique d'un groupe moto ventilateur de véhicule automobile comportant une plaque porte-balais 5, pour l'alimentation en courant du moteur du groupe. Ladite plaque est destinée à être monté sur la culasse du moteur de groupe moto ventilateur, non représentée. Ledit dispositif comprend aussi un support 1 de circuit électronique d'alimentation dudit moteur. Ladite plaque 5 et ledit support 1 sont assujettis l'un à l'autre.

Ledit circuit électronique 3 du support 1 est, par exemple, un circuit de puissance et/ou de contrôle/commande d'alimentation du moteur du groupe moto ventilateur. Il pourra comprendre des connecteurs 30 de courant de puissance et/ou des connecteurs 32 de courant de contrôle/commande à des circuits extérieurs.

Le support 1 comprend une plaque en aluminium issue de fonderie pour recevoir des composants des circuits électroniques de puissance et/ou de contrôle/commande.

Ladite plaque en aluminium est entourée d'une ceinture 34, située, pour partie, en vis-à-vis d'un flanc 36 de la plaque porte-balais 5, ladite ceinture 34 et ledit flanc 36 étant en arc de cercle de façon à permettre une rotation de la plaque porte-balais 5 par rapport au support 1 lors du montage, comme cela sera détaillé plus loin. La ceinture 34 et le flanc 36 constituent également une surface d'appui mutuel.

De cette manière, la plaque porte balai 5 est situé à coté du support 1, notamment radialement. La plaque porte-balais 5 s'étend ainsi sensiblement dans le même plan que celui dans lequel s'étend le support 1.

Lesdits moyens d'assemblage sont prévus au voisinage de ladite ceinture 34 et du flanc 36. Il s'agit donc de parties périphériques de la plaque porte-balais 5 et/ou du support 1. Les moyens d'assemblage comprennent des éléments en métal présents sur la plaque porte-balais 5 et des éléments en plastique présents sur le support 1, ou réciproquement, coopérant entre eux pour assurer le pré-positionnement.

Sur la figure 2, on a représenté seul le support 1 de circuit électronique de puissance du groupe moto ventilateur évoqué précédemment, vu de dessus.

La surface 12 du support 1 destinée à être en contact avec la plaque PPB 5 comporte une portion de rail circulaire 13 d'axe 10 sensiblement vertical, de rayon 11, ayant une première extrémité 21 et une deuxième extrémité non représentée.

Elle comporte en outre un doigt 15 d'assemblage de la plaque PPB 5 en opposition au rail 13 et séparé de lui d'une fenêtre 16 d'engagement de la plaque PPB 5 sur le support 1.

La surface 12 comporte en plus une butée 17 de positionnement de référence de fin de rotation.

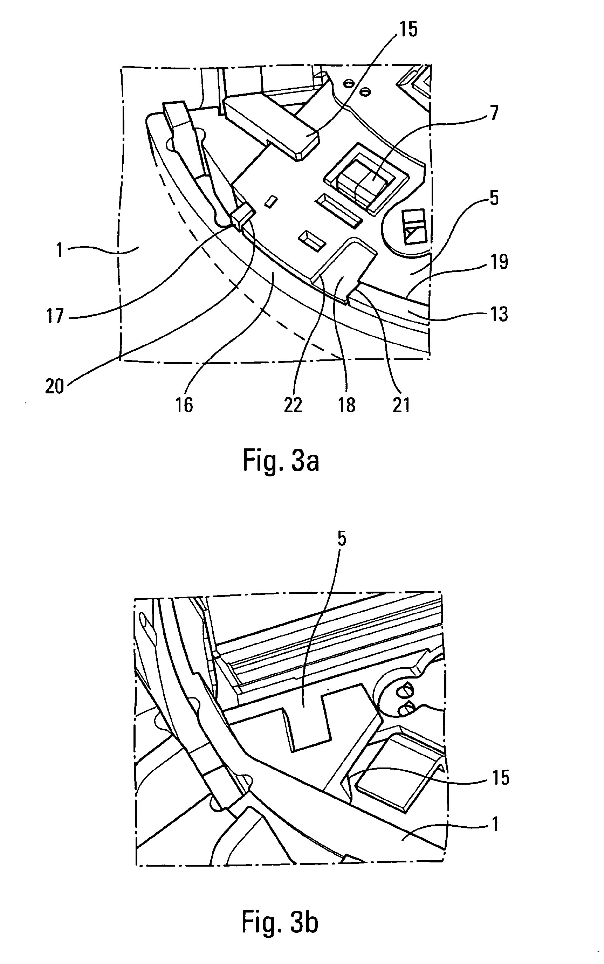

Parallèlement, en référence à la figure 3-a montrant le montage de la plaque 5 sur le support 1 et correspondant à la figure 2, la plaque 5 comporte une portion cylindrique 19, d'axe 10, de rayon 11 et qui peut glisser sur le rail 13 lorsqu'on fait pivoter la plaque 5 autour de l'axe 10, une lumière 18 pour engager la plaque 5 sur le support 1 et mettre en contact la portion cylindrique 19 sur le rail 13, qui sert aussi de référence de positionnement en complément de la butée 17 au moins quand la plaque 5 est maintenue et saisie dans le doigt 15, et une face 20 d'appui sur la butée 17.

On notera que la fenêtre 18 est suffisamment large pour permettre de mettre en contact la surface 19 sur le rail 13. Pratiquement elle est au moins aussi large que la partie du doigt 15, qui saisit la plaque 5 est longue.

Les moyens 12, 13 et 15 sont ainsi agencés pour maintenir la plaque PPB 5 sur le support 1 en position axiale déterminée par l'axe 10 et la saisir entre la surface 12 et le doigt 15 et les moyens 17, 20 et 13, 19 permettent son positionnement précis.

Par ailleurs, si on se reporte à nouveau à la figure 1, on constate que la plaque 5 et le support 1 sont reliés électriquement l'un à l'autre par des cosses 8 assurant un contact électriques entre la partie puissance du circuit électronique du support 1 et la plaque 5, en particulier avec des pistes 38, destinées à relier ledit circuit aux balais 7. Ces cosses 8 participent à la fixation de la plaque 5 et du support 1 entre eux.

Le montage de la plaque 5 va maintenant être décrit.

Pour fixer la plaque 5 au support 1, on l'applique sur le support 1 à plat par translation selon la direction déterminée par l'axe 10, jusqu'à venir en appui sur la surface 12, et en faisant en sorte que le bord 22 de la fenêtre 18 le plus proche de la face d'appui 20 soit en regard de l'extrémité 21 de la portion de rail 13.

Ensuite par une rotation autour de l'axe 10, on met en appui la face 20 sur la butée 17, la plaque 5 s'engageant entre le doigt 15 et la surface 12.

La plaque étant ainsi maintenue en position, on soude les pistes d'alimentation du moto ventilateur sur les cosses 8, ce qui achève de fixer la plaque PPB 5 sur son support 1 sans qu'il soit besoin de recourir à des vis.

## Revendications

1. Dispositif d'alimentation en courant électrique d'un groupe moto ventilateur de véhicule automobile, ledit dispositif comportant une plaque (5) porte-balais, pour l'alimentation en courant du moteur du groupe, un support (1) de circuit électronique (3) d'alimentation dudit moteur, ladite plaque (5) et ledit support (1) étant assujettis l'un à l'autre, **caractérisé par le fait qu'**il comporte en outre des moyens (13, 15, 17) d'assemblage du support (1) sur la plaque porte-balais (5), agencés pour assurer un pré-positionnement relatif de l'un par rapport à l'autre lors du montage.

2. Dispositif selon la revendication 1, dans lequel les moyens d'assemblage (13, 15, 17) comportent des moyens (15) de saisie et de maintien et des moyens (13, 17) de positionnement.

3. Dispositif selon l'une des revendications 1 et 2, dans lequel le support (1) est en aluminium issu de fonderie.

4. Dispositif selon l'une des revendications 1 à 3, dans lequel les moyens d'assemblage comportent un doigt (15) de saisie et de maintien et des surfaces de référence (15, 17) pour le positionnement de la plaque porte-balais.

5. Dispositif selon l'une des revendications 1 à 4, dans lequel la plaque porte-balais (5) et les moyens d'assemblage (13, 15, 17) sont agencés (13, 15, 17; 18, 19, 20) pour fixer ladite plaque (5) audit support (1) par la combinaison d'une translation de direction (10) déterminée et d'une rotation autour d'un axe (10) parallèle à ladite direction (10).

6. Groupe moto ventilateur comprenant un dispositif d'alimentation en courant selon l'une quelconques des revendications précédentes.
